# EUROPEAN PATENT APPLICATION

(11) **EP 1 536 384 A2**
(43) Date of publication of application: **01.06.2005**
(21) Application number: 04078208.8
(22) Date of filing: 25.11.2004
(51) Int. Cl.: G07F 7/00

(54) **Improvements relating to metering**

(30) Priority: 25.11.2003 GB 0327365
(71) Applicant: Landis+Gyr Limited, Telford, Shropshire TF1 3YG (GB)
(72) Inventor: Cowburn, John, Darwen, Lancashire BB3 2LG (GB)
(74) Representative: Humphrey-Evans, Edward John

(57) **Abstract**

The present invention relates to utility meters, and more especially, the present invention relates to electricity meters. There are two general mechanisms for payment of utility provision, namely, post-payment and prepayment. In post-payment systems, the meter to supply is monitored and a bill is produced every quarter (or fixed period) with an amount of the bill relating to the quantity of utility, consumed. In pre-payment systems, an amount of utility credit is purchased and a taken provided. Following deregulation of many utility companies, it is now possible to purchase a particular commodity from one of a number of suppliers. There are now becoming available, various wireless band household and office control systems. The present invention provides a solution, applicable to both pre- and post-payment meters.

## Description

### Field of Invention

The present invention relates to utility meters, and more especially, the present invention relates to electricity meters.

### Background to the Invention

There are two general mechanisms for payment of utility provision, namely, post-payment (credit) and pre-payment. In post-payment systems, a metered supply is monitored and a bill produced every quarter (or fixed period) with an amount of the bill relating to the quantity of utility consumed. In pre-payment systems, an amount of utility credit is purchased from a point of sale machine and a token provided. The token - which may be a smart card or key, for example - is inserted through a slot into a token reading apparatus associated with the meter and an amount of utility is allowed to flow, corresponding to the amount purchased.

Following deregulation of many utility companies, it is now possible in many countries to purchase a particular commodity from one of a number of suppliers. In the case of post-payment systems, change of supplier requires meter reading to happen concurrently with supplier change: this complicates matters and few customers will actually change supplier. However, pre-payment token users are not so disadvantaged and are normally presented with a choice of supplier when they present their token for re-crediting. Nevertheless, it is frequently the case that the amount of utility purchased is typically from the same provider.

There are now becoming available various wireless band (communications channel) household and office control systems. Such control systems operate on communications technology to ride from GSM, Ethernet and other low-power wireless control-communication systems. In such systems, a computer is linked to control appliances such as mobile phones, dishwashers, washing machines and other apparatus. A growing number of mainstream products such as mobile phones, headsets, PDAs, MP3 players, cameras and laptops can be controlled/operated remotely in a consumer's Personnel Area Network. Perceived advantages are numerous and range from having a cooker timer delayed for when one is unavoidably detained at work, so that dinner is ready on time, to the transmission of video programmes from a satellite receiver to, for example, a bedroom within the house.

Along with many items of equipment, it is now planned that some utility meters will be equipped with low-power wireless (communications channel) band control. Nevertheless, the replacement of an otherwise functioning unit could be seen as being needlessly expensive.

### OBJECT OF THE INVENTION

The present invention seeks to provide an improved utility meter. In particular, the present invention seeks to provide a communications channel functionality, such as a low-power wireless system, to a utility meter.

### SUMMARY OF THE INVENTION

In accordance with a first aspect of the invention, there is provided a utility meter system comprising: a utility meter operable to meter a supply of utility and which is operable to accept a payment key and a communications channel payment key, wherein the communications channel payment key is operable to be controlled by a communications channel controller and is operable to receive information from the communications channel controller, whereby meter data may be transferred between the meter in the communications channel controller.

Conveniently, the communications channel is a wireless communications channel. The communications channel could be a wired connection from the payment key to the communications controller. The meter can be arranged such that power supply terminals are positioned within an aperture to accept the payment key such that, upon insertion of the payment key, the payment key can receive electric power from such power supply terminals.

In another embodiment, the payment key is a pre-payment key, and has a battery and a timer, wherein the pre-payment key transmit a signal to a controller within a preset time period, which signal contains credit information and meter identity information. In a still further embodiment, the pre-payment key may transmit status information only when credit is below a preset level. Upon receipt of a low credit level signal, the communications controller would enable/determine prices of further credit units dependent upon what terms were offered by various utility companies and enable purchase of utility credit automatically - provided certain preconditions are met - or upon manual confirmation.

In contrast to this pre-payment scenario, the meter could also be operated is a post-payment or credit meter, wherein, at the end of a particular accounting period, consumption data from the meter is transferred to the communications controller, which then passes the data to the utility company concerned. The transfer of data from the communications controller to the utility company could be performed by e-mail, as well as alternatively to postal services. It would also be possible to arrange from the transfer of consideration to be performed by automatic ban transfer. It is believed that a pre-existing agreement would need to be in place such that the utility company concerned would be able to budget to the needs of its customers, and thereby be able to provide a utility supply.

The communications controller will be programmed with the addresses of utility and internet sites whereby to compare further utility prices and enable purchase of utility credit/units. Upon purchase of an amount of utility units, the communications channel controller will issue a signal to the payment key; if the payment key is powered by the meter, and transmission of the signal is time in dependent. However, if the payment key is powered by an integral electrical cell, then the transmission of the data relating to a purchase of credit/units is timed to coincide with the period when the payment key is in receive made all, for example, subsequent to a transmission of data from the payment key, at its predetermined time, or after a low credit signal has been determined.

The present invention thus enables a pre-existing pre-payment utility meter to operate within a communications channel controlled environment. In some embodiment the present invention, a smartcard for payment key is powered by the meter into which is being inserted rather than by the provision of separate power supply, whether integrated or separately associated with a smart card or payment key.
In accordance with a further aspect of the invention, there is provided a method of operating in low power wireless communications system two control utility meter operation.

### BRIEF DESCRIPTION OF THE FIGURES

The invention may be understood more readily, and various other aspects and features of the invention may become apparent from consideration the following description and the Figures as shown in the accompanying drawing sheets, wherein:
Figure 1 illustrates a known pre-payment meter operable to receive a pre-payment key;
Figure 2 shows any further known meter operable to receive a pre-payment card;
Figure 3 shows a communications channel pre-payment key in accordance with the invention;
Figure 3a shows a variant of the communications channel pre-payment key;
Figure 4 shows the communications channel pre-payment key of Figure 3 inserted in a utility meter;
Figure 5 shows a second wireless pre-payment key in accordance with the invention; and,
Figure 6 shows the second communications channel pre-payment key is inserted in the utility meter.

### DETAILED DESCRIPTION OF THE INVENTION

There will now be described, by way of example only, the best mode contemplated by the inventor for carrying out the present invention. In the following description, numerous specific details are set out in order to provide a complete understanding to the present invention. It will be apparent to those skilled in the art, that the present invention may be put into practice with variations of the specific

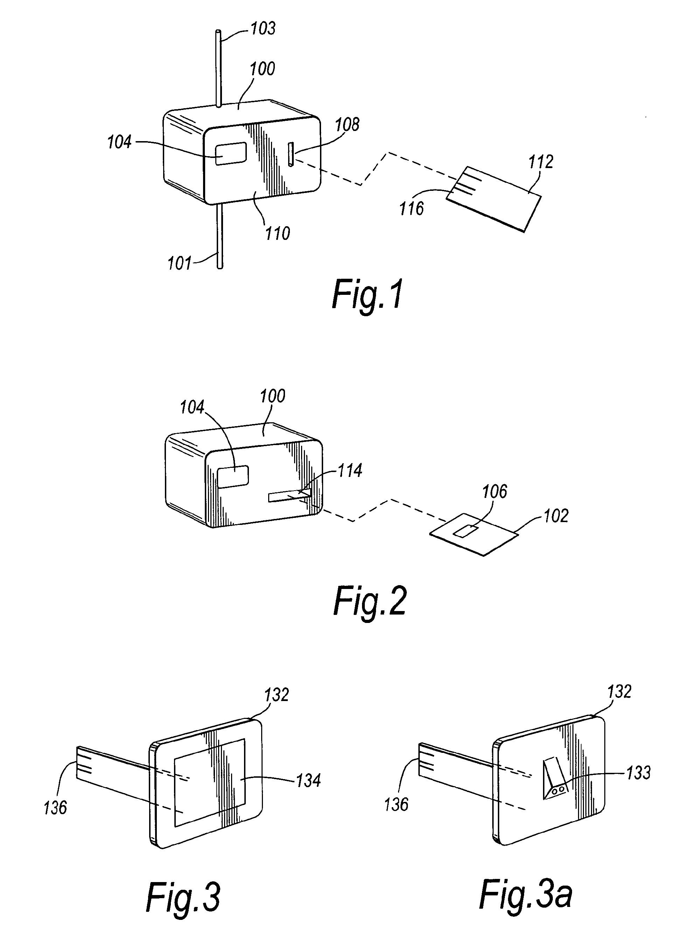

With reference to Figure 1 there is shown a first prior art example of a meter 100, which, in the case of electricity meters, is fastened to a wall and receives an input line 101, and an outlet cable 103 to, for example, a distribution board within a premises. In the case of a gas meter, these reference numerals could indicate inlet and outlet pipes. In the case of water meter, the meter may be remote from the actual water pipes and only one cable will receive data relating to the amount of water flow. On the front face 110 of meter 100, there is provided a visible counter 104 and a slot 108. In this case, a pre-payment key 112 is inserted into the corresponding slot 108. In use, the contacts 116 on the leading edge of the pre-payment key enable the memory associated with the key to be powered up by voltage supply. Pre-purchased units of utility credited at the meter in the memory within the pre-payment key is amended to correspond such that there is no further credit available.

Referring now to Figure 2, there is shown a second prior art meter 100. On the front face 110 of meter 100, there is provided a visible counter 104 for the slot 114 to accept a smart-card 102 having, for example, an embedded chip 106. In use, card 102 is inserted into slot 114, and the number of units purchased, as indicated and encrypted on the embedded chip 106, is read by the meter. Conveniently, counter 104 shows the number of units with which the meter is credited. If the metered utility is used, the credited units are depleted.

Figure 3 shows a communications channel pre-payment key in accordance with a first aspect of the invention, wherein a pre-payment key 132 is provided with an elongated member 133 having contacts 136 at a distal end thereof, opposite a handle portion within which an antenna is mounted, which handle portion conveniently protrudes a minimal distance from the face of the meter. As explained earlier, these pre-payment keys have terminals, which receive an input voltage from the meter. This voltage can be used to power a wireless transceiver and decoding apparatus. Once inserted into a meter low-power microwave transmitter/receiver can operate using antenna 134. In figure 3, a patch antenna is shown, although a dipole or other type of antenna may equally well be used. The microwave functions may operate on a timed basis, so as to prevent needless transmission of microwave signals. The timer may operate so to operate in receive made with certain period of time each day. Alternatively, the microwave circuitry may only operate once a low credit value within the meter is determined. The wireless circuitry may then operate in receive mode awaiting credit details from the communications channel controller. The key port on some of the known pre-payment keys have a 15V DC output that can be permanently on and also provide a 5V DC output to power the key during data exchange. The data lines are bi-directional, and can be used to gain control of the meter.

Upon receipt of a low credit level signal, the communications channel controller would determine prices of further credit units dependent upon the cost of credit as offered by various utility companies for the advertised rates, for example, posted on a web-site. Once the best value rate is determined from a particular supplier for a particular amount of monetary value, then the communications channel controller would enable a transfer to take place or could provide details for manual intervention. Once the price for a number of units has been determined, then signalling between the communications channel controller and the pre-payment wireless module can begin, whereby the wireless pre-payment module can transmit to the meter the value of the units to be credited

The communications channel is conveniently wireless radio, as suggested above. However, in certain situations, the meter may not be within range of the communications controller. In such circumstances, the pre-payment key may be connected via a wired lead to the communications controller. An advantage of such a lead is that a power supply could be provided to prevent pre-payment keys not having an accessible power source obtainable from the meter. Figure 3a shows a variant pre-payment key of figure 3 having a socket whereby a lead can be provided to connect the pre-payment key to the communications controller. Such an embodiment, would enable a further customer key to be used to download credits in the event of failure of the communications channel, whereby to act as a "repeat, talk through" socket.

In the alternative mode of operation, the (pre-) payment meter could also be operated as a post-payment all credit meter, wherein at the end of a particular accounting period, consumption data from the meter is transferred from the meter to the communications controller, which then passes the data to the utility company concerned. The transfer of data from the communications controller to the utility company could be performed by e-mail, as well as or alternatively to postal services. It would also be possible to arrange for the transfer of consideration to be performed automatically by bank transfer. It is believed that a pre-existing agreement would need to be in place, such that the utility company concerned, would be able to budget for the needs of its customers, and thereby be able to provide a utility supply at a competitive rate. Nevertheless, the choice of supplier would be available.

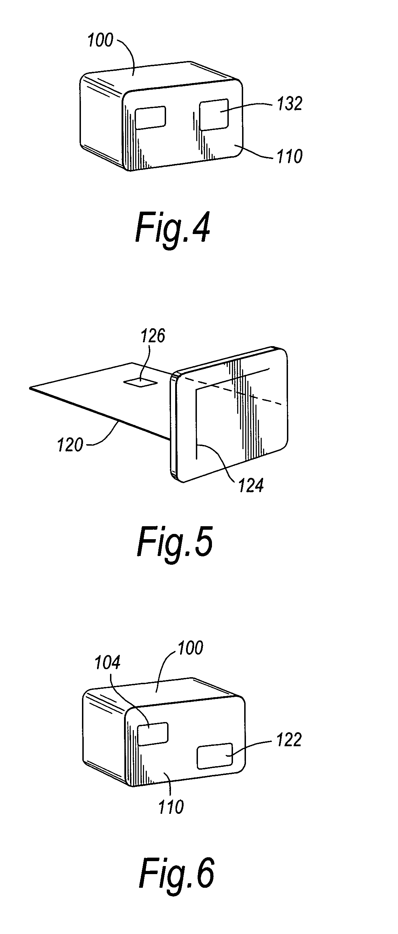

Figure 4 shows the meter 100 with a wireless payment key inserted therein. As noted above, the external portion of the key 132 is provided so that it is generally flush with a surface of the meter but can be extracted by hand without complication. Nevertheless, it is intended that the wireless payment key is maintained in position throughout its use. The advantages of using this approach for future communications protocols are several, with the key requiring no skill to fit and to remove, and is easily upgradeable in the future. Nevertheless, tamper-proof sealing could be seen by some to be an issue. The key can be fitted to all existing pre-payment meters in the field and certification of a payment meter will not be affected by the addition of a different type of payment key. Furthermore, no software need be written for the meter - development effort will only be required for the pre-payment key.

Turning now to Figure 5, there is shown a payment card having a corresponding handle portion/antenna body 122. Conveniently, the card is fitted with terminals to enable the card to obtain power from corresponding terminals (not shown) associated with the meter. A smart chip interface patch 126 is shown which corresponds in position (when the card is inserted into an aperture of the meter) with a smart chip read head. The antenna is shown as an L-shaped dipole and would have an overall length of the order of a centimetre or so, dimensioned to correspond with one of several networks, which operate at 400MHz, 800MHz or 2.5GHz. As will be appreciated, the size of the internal corresponds with the wavelength of propagation. A smart card meter can supply 5V and can transmit and receive data through the smart card interface. Unfortunately, the 5V supply is normally only present when data is being exchanged: either the payment key can instruct the meter to continue with the power supply by continuing or starting a dialogue or the microwave transmitter must receive and transmit wirelessly as economically as possible, for reasons of electrical cell longevity. Accordingly, transmit and receive periods will be defined. For example, when the credited amount of the utility approaches a 70% consumed level, then the communications channel transmitter may attempt to communicate with a communications channel controller. If no further amounts of credits have been transmitted by the time that a 75% consumed level has been attained, then the wireless transmitter will transmit again. This process can be repeated either until utility units have been credited or, indeed, the number of units have expired and the utility meter is inoperative. Nevertheless, national regulations may prevent such an occurrence happening. As is known, pre-payment smart cards are taken to the meter and then returned. The card may have an aperture defined (not shown) or similar so as to disable a mechanical presence sensor, whereby to prevent automatic ejection of the card.

Thus, the present invention provides a device designed to plug into a key port of a key meter to mimic a pre-payment key. The device could be similar in design to proprietary Meterman ™ key or USB device.

A range of low power wireless band pre-payment keys could be designed to fit the key-port: GSM, Ethernet, for example. When the payment key is inserted and during the log on process, the meter will therefore power up the payment key, and maintain power for as long as it remains present. Having logged on, the payment key will await commands received by its communications port. The payment key will then communicate with the meter when required to perform the operation requested such as take readings, operate switches and relays, update the clock, change tariffs and so on. It would be possible to control that she every feature of the meter to its key port, making it ideal for remote operation.

The meter-payment key interface is conveniently common to all variants and will work with meters produced by several manufactures, providing an appropriate sign-on algorithm is employed. The commands issued by the control system will be common and independent of the communications method. One difference of no between the pre-payment keys will be the form of the communications used. A housing could also be common for most variants.

It will be appreciated that a final specification for meters in accordance with invention has yet to be produced, but it is likely that there will be requirements for compatibility with a number of systems such as Ethernet, etc. Nevertheless, the design provides a simple solution to the communications channel controller requirements for payment cards and provides a card having wireless (including infrared) and other control capability, which can be adapted to provide features such as remote disconnect/connect enable; remote meter reading/tariff update/ debt adjust/ credit adjust/change of tenancy/ fraud detection and more.

## Claims

1. A utility meter system comprising:
a utility meter operable to meter a supply of the utility and which is operable to accept a payment key and a communications channel payment key, wherein the communications channel payment key is operable to be controlled by a communications channel controller and is operable to receive information from the communication channel controller, whereby meter data may be transferred between the meter and the communications channel controller.

2. A utility system according to claim 1, wherein the communications channel is a wireless channel.

3. A utility system according to claim 1 or 2, wherein the meter is arranged such that power terminals are positioned within an aperture to accept the payment key, such that upon insertion of the payment key, the payment key can receive electric power from such power terminals.

4. A utility system according to claim 1 or 2, wherein the payment key acts only to transfer meter readings to the communications controller and the meter is used in a post-payment (credit) mode.

5. A utility system according to claim 1, wherein the meter operate as in a pre-payment mode and the pre-payment key have a battery and a timer wherein the pre-payment key transmits a signal to the communications controller with a guide preset time period and which signal contains credit information and meter identity information.

6. A utility system according to claim 5, wherein the pre-payment key may transmit status information only when credit is below a preset level.

7. A utility system according to claim 5, wherein the communications controller is operable, upon receipt of the low credit level signal, to determine prices of further credit units, dependent upon terms offered by various utility companies, with reference to a table.

8. A utility system according to claim 5, wherein the communications controller is operable to enable purchase of utility credit automatically, subject to the satisfaction of certain preconditions and/or upon manual confirmation.

9. The utility system according to claim 5, wherein the communications controller is programmed with the addresses of utility and internet sites, whereby to compare prices and enable purchase of credit.

10. A utility system according to claim 5, wherein, upon purchase of an amount of utility units, the communications controller issues a signal to the pre-payment key; if the pre-payment key is powered by the meter, then transmission of the signal is time independent.

11. A utility system according to claim 5, wherein, if the pre-payment key is powered by an integral electrical cell, transmission of the data relating to a purchase of credit is time to coincide with the period when the pre-payment key is in receive mode, or subsequent to a transmission of data from the payment key, at its predetermined time, or after a low credit signal has been determined

12. A the utility meter pre-payment key, operable in any one of claims 1-11.

13. A method of operating a pre-payment system according to claim 1, the method comprising the steps of:
operating wireless circuitry associated with the payment key whereby to transmit a low credit level signal is to the communications channel controller;
upon receipt of a low credit level signal, operating the communications channel controller to determine prices of further credit units and enabling a transfer to take place or providing details for manual intervention; and
subsequent to the purchase of a number of units, causing the communications controller to signal to the pre-payment wireless module data relating to the value of units of commodity purchased, whereby the wireless pre-payment module can transmit to the meter the value of the units to be credited.

14. A method of operating a payment system according to claim 1, the method comprising the steps of:
transmitting, at particular intervals, a value of metered units as determined by the meter to the communications channel controller, whereby the communications channel controller can assist in payment of particular amounts of commodity from a particular commodity supplier.
